(19) Europäisches Patentamt
European Patent Office
Office européen des brevets

(11) **EP 4 369 126 A1**

(12) **EUROPEAN PATENT APPLICATION**

(43) Date of publication:
**15.05.2024 Bulletin 2024/20**

(21) Application number: **22206489.1**

(22) Date of filing: **09.11.2022**

(51) International Patent Classification (IPC):
**G05B 19/418** (2006.01)

(52) Cooperative Patent Classification (CPC):
**G05B 19/41805**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Aktiengesellschaft**
**80333 München (DE)**

(72) Inventors:
• **Wurm, Kai**
  **81739 München (DE)**
• **Dietrich, Vincent**
  **80639 München (DE)**
• **Kindl, Andreas**
  **92269 Fensterbach (DE)**

(74) Representative: **Siemens Patent Attorneys**
**Postfach 22 16 34**
**80506 München (DE)**

(54) **METHOD AND ASSEMBLY ARRANGEMENT TO PROGRAM AUTOMATED MACHINES FOR ASSEMBLING WORKPIECES, COMPUTER-IMPLEMENTED TOOL AND AUTOMATED MACHINE**

(57) In order to program automated machines for assembling workpieces in a machine self-assisted manner to execute assembly tasks assembling workpieces in a work area it is proposed, when **<i>** related to a work area (WA) at least one automated machine (AMC, MPL) with a control unit (CTU) running a control program (CPG) executes each under the control of the control unit (CTU) an assembly task (ABT) to assemble by automated machine motions (AMCM) a number of workpieces (WP1, WP2, ... WPn), wherein the fixtures (FXT) are mounted in relative positions (RP) to another, **<ii>** sequences of automated machine motions (SAMCM) of the at least one automated machine (AMC, MPL) accomplishing the assembly task (ABT) are executed according to an assembly program (APG) with all required assembly related processing, assembly and/or handling operations (AOP) to be needed accordingly, **<iii>** further relative positions (RP') of the at least one automated machine to the fixtures fixating the workpieces in question are determined by a calibration process (CBP), to **<1>** collect (clt) semantic annotations (SAT) describing the assembly task and being associated with the fixtures through the at least one automated machine, **<2>** determine (dtm) a sequence of assembly steps (SAS) from the semantic annotations, **<3>** parameterize (ptz) the operations by parameters (PM) according to the semantic annotations (SAT) associated with the operations, **<4>** compute (cpt) by using a motion planning algorithm (MPA) the automated machine motions based on the sequence of assembly steps, the parameterized operations and the further relative positions of the at least one automated machine to the fixtures.

FIG 3 — Process flow for programming an automated machine for assembling workpieces

**Description**

The invention refers to a method to program automated machines for assembling workpieces according to the preamble claim 1, an assembly arrangement to program automated machines for assembling workpieces according to the preamble claim 6 and a computer-implemented tool according to the preamble claim 11 and an automated machine according to the preamble claim 16.

When according to state of the art assembly tasks for assembling workpieces, which can also be parts or objects, are automated with automated machines such as robots, the automated machine is programmed using vendor-specific programming tools and languages.

Using these programming tools, a sequence of automated machine motions is explicitly programmed, hand-guided, or provided via teach-in on a teach pendant, so that the sequence of all automated machine motions accomplishes the assembly task. A domain expert ensures that this sequence of motions includes all required joining and handling operations and observes all production requirements.

Programming the automated machine is often done in-situ, i.e., the automated machine and all required peripheries are already set up and the automated machine is programmed in a work area or environment, a so-called "work cell", that it will be used in. During programming, all workpieces are assumed to be at known positions in the "work cell" or a camera system is used to determine the current position of the relevant workpieces during operation.

During assembly of two workpieces, one workpiece is usually kept in a fixed position while the other workpiece is assembled to it. To eliminate imprecisions in workpiece placement resulting from imprecisions in automated machine movements or visual measurements, and to cope with production tolerances in the workpieces, workpieces are usually placed on fixtures that fixate the workpiece during assembly.

Fixtures can also be used whenever workpieces are transferred from one handling system to another, e.g., between several automated machines, between automated guided vehicles and automated machines, or between human workers and automated machines. The position of every fixture relative to the automated machine is assumed to be fixed and precisely known.

Ensuring that the position of the fixtures remain fixed is usually done by physically connecting the fixtures to the automated machine, e.g., by screwing both onto a common structure. To determine the relative position between the automated machine and the fixtures precisely, a calibration step is usually required at least once.

It is an objective of the invention to propose a method, a programming unit and an assembly arrangement to program automated machines for assembling workpieces, by which the automation machines are programmed in a machine self-assisted manner to execute assembly tasks assembling workpieces in a work area.

The invention addresses the problem of programming automated machines for assembly tasks. The process of assembling workpieces includes joining operations such as placing one part on another or sliding or pressing one part into another. The invention further addresses how to specify sequences of assembly steps, how to perform each assembly step, as well as generating all required automated machines motions to execute the assembly steps.

This objective is solved with regard to a method defined in the preamble of claim 1 by the features in the characterizing part of claim 1.

The objective is further solved with regard to an assembly arrangement defined in the preamble of claim 6 by the features in the characterizing part of claim 6.

Moreover the objective is solved with regard to a computer-implemented tool defined in the preamble of claim 11 by the features in the characterizing part of claim 11.

Furthermore the objective is solved with regard to an automated machine defined in the preamble of claim 16 by the features in the characterizing part of claim 16.

The main idea of the invention according to the claims 1, 6, 11 and 16 in order to program automated machines for assembling workpieces, by which <i> related to a work area at least one automated machine with a control unit running a control program executes each under the control of the control unit an assembly task to assemble by automated machine motions a number of workpieces, which are placed at least partly in the work area on a set of fixtures that fixate the workpieces in question during the assembly, wherein the fixtures are mounted in relative positions to another, e.g., in a regular grid on a precisely machined mounting base, <ii> sequences of automated machine motions of the at least one automated machine accomplishing the assembly task are executed according to an assembly program with all required assembly related processing, assembly and/or handling operations to be needed accordingly, wherein the assembly program is loadable into and runs on the control unit and wherein each operation depending on a specification of the operation is consistent with at least one movement of the automated machine, <iii> further relative positions of the at least one automated machine to the fixtures fixating the workpieces in question are determined by a calibration process, in particular during the assembly program related processing, assembly and/or handling operations AOP are programmed, is to

- collect semantic annotations describing the assembly task and being associated with the fixtures through the at least one automated machine,
- determine a sequence of assembly steps from the semantic annotations, wherein each step of the sequence of assembly steps corresponds to one operation of the assembly program,

- parameterize the operations of the assembly program by parameters according to the semantic annotations associated with the operations,
- compute by using a motion planning algorithm the automated machine motions based on the sequence of assembly steps, the parameterized operations of the assembly program and the further relative positions of the at least one automated machine to the fixtures.

The proposed solution differs from the state of the art described in the beginning by several advantages given by

- combining machine-readable work instructions, the semantic annotations that are associated with the fixtures, and automated motion generation,
- offering a way of generating automated machine programs for assembly tasks from an arrangement of physical fixtures,
- generating such programs does not require expert automated machine knowledge such that users need indeed to specify the semantic annotations in an appropriate tool, but they (the users) do not have to program automated machine motions.

Firstly, this leads to a reduction in efforts for automating assembly tasks, especially if similar tasks have been set up before, while with the proposed solution large parts of the engineering artefacts such as fixture designs, semantic annotations, etc., can be reused in future tasks.

Secondly, this significantly reduces the effort of calibrating the workspace or work area of the automated machine . By relying on a precisely machined mounting base, the relative position of all fixtures on the mounting base can be derived from the relative position of the mounting base. Therefore, only the mounting base needs to be calibrated against the automated machine. And the semantic fixtures can be used as a calibration target that is automated machine readable.

Thirdly, the modular design of the solution allows to quickly change parts of an assembly process, e.g., add or remove operations, without changing other parts of the process. In this way it offers a greater flexibility than previous state of the art solutions.

The proposed solution solves the problem of programming automated machines for assembly tasks to assemble workpieces by introducing inter alia a method (cf. claim 1) or a system or an assembling arrangement (cf. claim 7) consisting of a set of part fixtures, a way of semantically annotating these fixtures to encode assembly instructions and sequences of automated machine motions of the automated machine, and a way of calibrating the relative position of the set of fixtures to the automated machine.

One key aspect of the proposed solution are the semantic annotations that are associated with the fixtures in the work area of the automated machine.

This key aspect of the proposed solution addresses further aspects of the proposed solution, which have to be considered :

a) Obtaining the description of an assembly task from semantic annotations associated with fixtures in the work area of the automated machine,
b) determining a sequence of assembly steps that achieves that assembly task,
c) parameterizing the assembly steps from information encoded in the semantic annotations,
d) calibrating the relative position of the set of fixtures to the automated, and
e) computing the automated machine motions that implement the assembly steps.

This leads to an "overall process" of the proposed solution to program an automated machine for assembly tasks to assemble workpieces using the semantically annotated fixtures supplemented by advantageous developments and being summarized as follows:

1. The automated machine collects, e.g. by reading, the semantic annotations of all the fixtures being needed in a given part of the work area, which are those that fixate the workpieces in question during the assembly. This could be done in an advantageous development (cf. claims 3, 8 and 18) by using a camera system, RFID reader, or other suitable device depending on how the semantic annotations are encoded. It might be necessary for the robot to scan the complete part of the work area for fixtures.

2. A sequence of assembly steps is determined from the semantic annotations. If (cf. claims 2, 7 and 12) the semantic annotations do not specify a sequence (i.e., a total order) but only which assembly step must be performed before another assembly step (i.e., a partial order) then one viable sequence is computed, e.g., using an optimization method that computes the sequence with minimal overall assembly time.

3. An assembly program is generated: The sequence of assembly steps determined in step 2 is the basis for the assembly program. Each step in the sequence corresponds to one operation in the program. Each operation can consist of one or several automated machine movements, depending on the specification of the operation (e.g., in a database of operations) .

4. Each operation in the assembly program is parameterized according to the semantic annotation information associated with the operation. Parameters of the processing, assembly and/or handling operation can include advantageously (cf. claims 4, 9 and 13) where to put a piece, how to put it there, with which force to put it there, from which direction to approach the target location and so on. Operations will use the fixtures as reference objects, especially to put workpieces on.

5. The further relative position of the automated machine to the set of fixtures is determined and advantageously (cf. claim 5, 10 and 17) by either using an optical system, e.g. the fixtures then will feature optical reference markers which are detectable by the optical system or by touching the fixtures with a "touch-up"-tool of the automated machine, wherein the fixtures will feature mechanical reference markers, e.g., an indentation, which are detectable by the "touch-up"-tool. All fixtures are mounted in a known relative position to another, e.g., in a regular grid on a precisely machined mounting base. In this way, knowing the relative position and orientation of one fixture to the automated machine allows to compute the relative position and orientation of all other fixtures to the automated machine.

6. Once the assembly steps sequence is known, all the operations are parameterized and the further relative position of the automated machine to all the fixtures are known all the automated machine motions are computed to achieve the assembly task as specified by the assembly steps sequence. This is done using the motion planning algorithm that computes the automated machine motion that enables the automated machine to move workpieces as specified in the assembly task.

According to an advantageous development of this key aspect (cf. claims 2, 7 and 12) Each fixture is associated with one or more processing or handling steps of an assembly task. The semantic annotations encode

- a type of the processing, assembly, or handling operations that need to be performed, e.g., referring to a list/database of operations available in a production system,
- how the processing, assembly, or handling operations should be done, e.g., relative movements, force parameters, etc., and/or
- in which order the processing, assembly, or handling operations should be done (partial or total ordering).

Besides the above, advantageous further developments of the invention arise out of the following description of a preferred embodiment of the invention according to FIGURES 1 to 3. They show:

FIGURE 1 an assembly arrangement to program automated machines for assembling workpieces,

FIGURE 2 an automated machine of the assembly arrangement into which a computer-implemented-tool to program the automated machine for assembling workpieces is loadable,

FIGURE 3 a process flow for programming an automated machine for assembling workpieces.

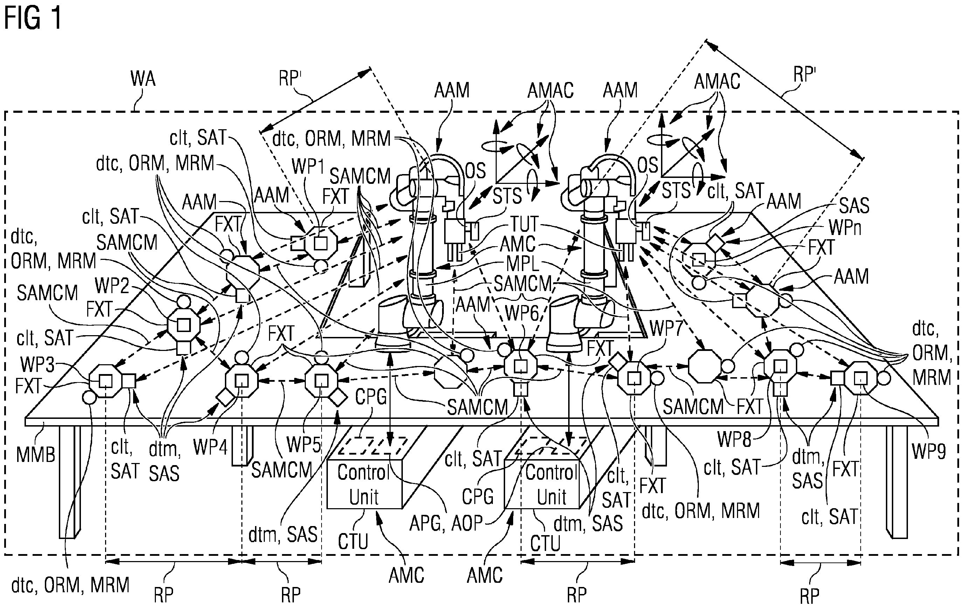

FIGURE 1 shows an assembly arrangement AAM to program automated machines for assembling workpieces with at least one automated machine AMC including each a manipulator MPL executing automated motions of the automated machine AMCM and each a control unit CTU to control the manipulator MPL by a running a control program CPG for executing the automated motions of the automated machine AMCM. The automated machine AMC with manipulator MPL is related to a work area WA and executes each under the control of the control unit CTU an assembly task ABT to assemble by the automated machine motions AMCM a number of workpieces WP1, WP2, WP3, WP4, WP5, WP6, WP7, WP8, WP9, WPn. By the workpiece WPn it should be expressed that the number of workpieces could be basically n times with $n \in \mathbb{N}$ , which means that the number can be basically infinite, however definitely more than the depicted ten workpieces WP1, WP2, ... WPn.

Besides the at least one automated machine AMC the assembly arrangement AAM includes a set of fixtures FXT, on which the workpieces WP1, WP2, ... WPn are placed at least partly in the work area WA, which fixate the workpieces WP1, WP2, ... WPn in question during the assembly and which are mounted in relative positions RP to another. This could be achieved advantageously, when they are for example mounted in a regular grid on a precisely machined mounting base MMB as depicted in the FIGURE 1.

The assembly arrangement AAM is characterized by occurring sequences of automated machine motions SAMCM of the at least one automated machine AMC, MPL accomplishing the assembly task ABT, which are executed according to an assembly program APG (cf. FIGFURE 3). In this assembly program APG there are combined all required assembly related processing, assembly and/or handling operations AOP to be needed for accomplishing the assembly task ABT. The assembly program APG can be loaded into and runs as the control program CPG on the control unit CTU, while each operation AOP depending on a specification of the operation is consistent with at least one movement of the automated machine AMC with the manipulator MPL.

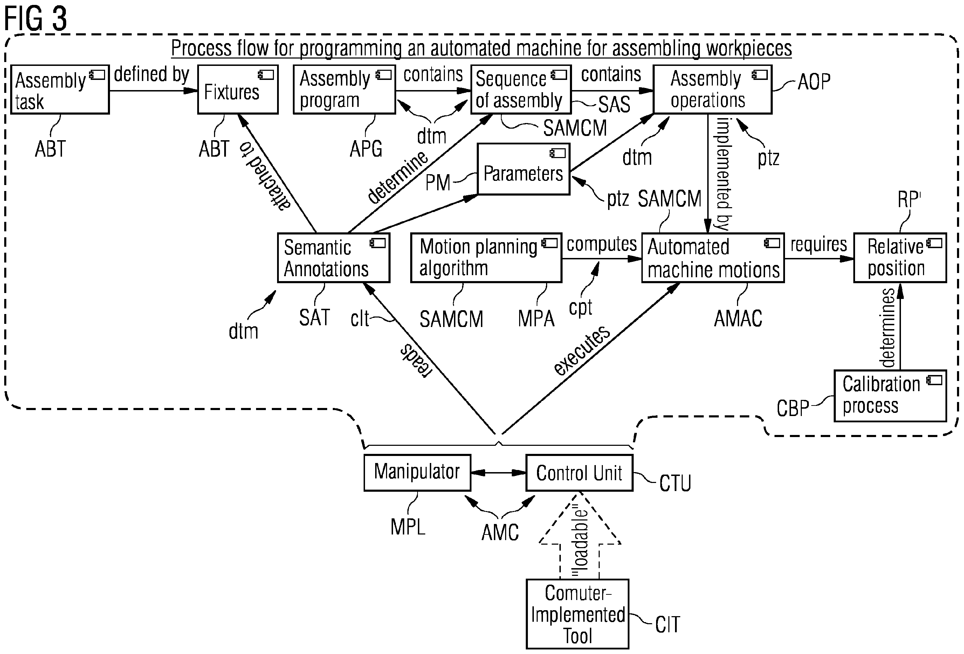

The assembly arrangement AAM is characterized further by a calibration process CBP being realized and preferably executed by either the assembly program APG or the control program CPG. By this calibration process CBP further relative positions RP' of the at least one automated machine AMC with the manipulator MPL to the fixtures FXT fixating the workpieces WP1, WP2, ... WPn in question are determined (cf. FIGURE 3).

This determination by the calibration process CBP takes place preferably when the assembly program related processing, assembly and/or handling operations AOP are programmed in the assembly program APG. In other words the calibration process CBP is considered by programming the assembly program related processing, assembly and/or handling operations AOP.

To determine the further relative positions RP' of the at least one automated machine AMC, MPL to the fixtures FXT the automated machine AMC with the manipulator MPL includes an optical system OS or alternatively a "touch-up"-tool TUT.

The optical system OS is able to detect dtc optical reference markers ORM assigned to the fixtures FXT, whereas the "touch-up"-tool TUT is able to detect dtc mechanical reference markers MRM, e.g., an indentation, assigned to the fixtures FXT.

In order to program automated machines for assembling workpieces within the assembly arrangement AAM the at least one automated machine AMC includes further a scanning technology system STS. By using this scanning technology system STS the automated machine AMC, MPL is able under the control of the control unit CTU running the control program CPG by scanning to collect clt semantic annotations SAT describing the assembly task ABT and being associated with the corresponding fixtures FXT to determine dtm based on the collected clt semantic annotations SAT a sequence of assembly steps SAS from the semantic annotations SAT, wherein each step of the sequence of assembly steps SAS corresponds to one operation AOP of the assembly program APG (cf. FIGURE 3).

The semantic annotations SAT encode preferably

- a type of the processing, assembly or handling operations AOP that need to be performed, in particular referring to a list and/or a database of operations available in a production system,
- how the processing, assembly, or handling operations AOP should be done, e.g., done by relative movements or by using force parameters, and/or
- in which order the processing, assembly or handling operations AOP should be done, e.g., by partial or total ordering.

By scanning these fixtures FXT the work area WA with the fixtures FXT is scanned preferably completely covering all the fixtures FXT in the work area WA.

The scanning technology system STS is advantageously a camera, a "Radio-Frequency IDentification <RFID>"- reader or other suitable device depending on how the semantic annotations SAT are encoded.

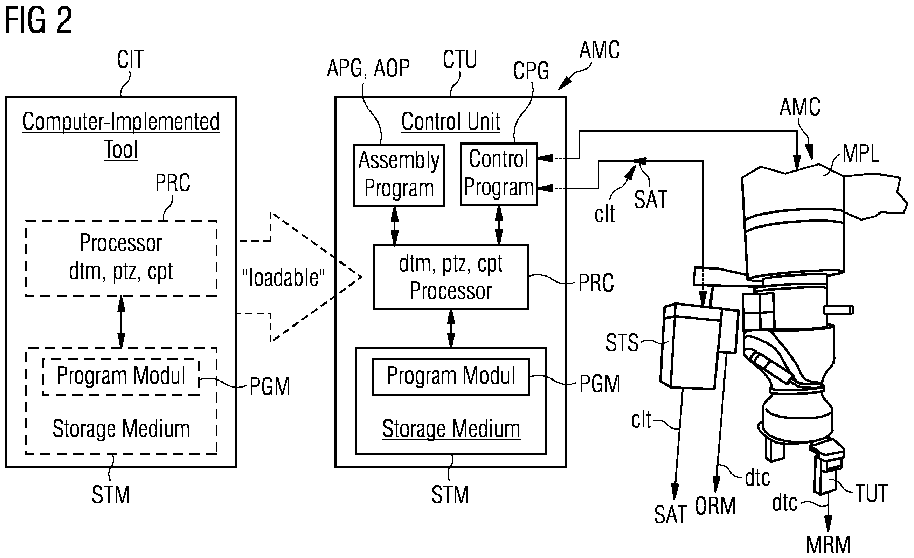

FIGURE 2 shows the automated machine AMC with the control unit CTU and the manipulator of the assembly arrangement AAM into which a computer-implemented-tool CIT to program the automated machine for assembling workpieces is loadable.

The control unit CTU, on which the control program CPG is running and into which the assembly program APG is loadable for running thereon includes a non-transitory, processor-readable storage medium STM having processor-readable program-instructions of a program module PGM and a processor PRC connected with the storage medium STM executing the processor-readable program-instructions of the program module PGM. The processor PRC is further linked to the control program CPG and the assembly program APG to program automated machines for assembling workpieces. The programming of automated machines for assembling workpieces occurs when the computer-implemented-tool CIT, which is preferably a Computer-Program-Product, e.g. designed as an APP, is loaded into the control unit CTU.

As soon as the computer-implemented-tool CIT is loaded into the control unit CTU the computer-implemented-tool CIT is made of the non-transitory, processor-readable storage medium STM having processor-readable program-instructions of the program module PGM for carrying out a process to program automated machines for assembling workpieces stored in the non-transitory, processor-readable storage medium STM and the processor PRC connected with the storage medium STM executing the processor-readable program-instructions of the program module PGM to carry out the process to program automated machines for assembling workpieces, by <i> determining dtm based on the collected clt semantic annotations SAT the sequence of assembly steps SAS from the semantic annotations SAT, wherein each step of the sequence of assembly steps SAS corresponds as already mentioned to one operation AOP of the assembly program APG, <ii> parameterizing ptz the operations AOP of the assembly program APG by parameters PM according to the semantic annotations SAT associated with the operations AOP (cf. FIGURE 3) and <iii> computing cpt by using a motion planning algorithm MPA the automated machine motions AMCM based on the sequence of assembly steps SAS, the parameterized operations of the assembly program APG and the further relative positions RP' of the at least one automated machine AMC, MPL to the fixtures FXT (cf. FIGURE 3).

The parameter PM the operations AOP of the assembly program APG are parameterized ptz according to the semantic annotations SAT associated with the operations include preferably at least one of the following (**1**) where to put the workpiece WP1, WP2, ... WPn in the work area WA, (**2**) how to put the workpiece WP1, WP2, ... WPn there, (**3**) with which force to put the workpiece WP1, WP2, ... WPn there and (**iv**) from which direction the automated machine AMC, MPL has to approach a target location in the work area WA.

FIGURE 3 depicts a process flow for programming an automated machine for assembling workpieces, which is carried out due to the description of the FIGURE 1 and 2 by the control unit CTU in connection with the manipulator MPL of the automated machine AMC, when the computer-implemented-tool CIT is loaded into the control unit CTU.

**Claims**

1. Method to program automated machines for assembling workpieces, by which

   **a**) related to a work area (WA) at least one automated machine (AMC, MPL) with a control unit (CTU) running a control program (CPG) executes each under the control of the control unit (CTU) an assembly task (ABT) to assemble by automated machine motions (AMCM) a number of workpieces (WP1, WP2, ... WPn), which are placed at least partly in the work area (WA) on a set of fixtures (FXT) that fixate the workpieces (WP1, WP2, ... WPn) in question during the assembly, wherein the fixtures (FXT) are mounted in relative positions (RP) to another, in particular in a regular grid on a precisely machined mounting base (MMB),
   **b**) sequences of automated machine motions (SAMCM) of the at least one automated machine (AMC, MPL) accomplishing the assembly task (ABT) are executed according to an assembly program (APG) with all required assembly related processing, assembly and/or handling operations (AOP) to be needed accordingly, wherein the assembly program (APG) is loadable into, and runs on the control unit (CTU) and wherein each operation (AOP) depending on a specification of the operation is consistent with at least one movement of the automated machine (AMC, MPL),
   **c**) further relative positions (RP') of the at least one automated machine (AMC, MPL) to the fixtures (FXT) fixating the workpieces (WP1, WP2, ... WPn) in question are determined by a calibration process (CBP), in particular during the assembly program related processing, assembly and/or handling operations AOP are programmed,

   **characterized by**:

   **d**) collecting (clt) semantic annotations (SAT) describing the assembly task (ABT) and being associated with the fixtures (FXT) through the at least one automated machine (AMC, MPL),
   **e**) determining (dtm) a sequence of assembly steps (SAS) from the semantic annotations (SAT), wherein each step of the sequence of assembly steps (SAS) corresponds to one operation (AOP) of the assembly program (APG),
   **f**) parameterizing (ptz) the operations (AOP) of the assembly program (APG) by parameters (PM) according to semantic annotations (SAT) associated with the operations,
   **g**) computing (cpt) by using a motion planning algorithm (MPA) the automated machine motions (AMCM) based on the sequence of assembly steps (SAS), the parameterized operations of the assembly program (APG) and the further relative positions (RP') of the at least one automated machine (AMC, MPL) to the fixtures (FXT).

2. Method according to claim 1, **characterized in that** the semantic annotations (SAT) encode

   - a type of the processing, assembly or handling operations (AOP) that need to be performed, in particular referring to a list and/or a database of operations available in a production system,
   - how the processing, assembly, or handling operations (AOP) should be done, in particular done by relative movements or by using force parameters, and/or
   - in which order the processing, assembly or handling operations (AOP) should be done, in particular by partial or total ordering.

3. Method according to claim 1 or 2, **characterized in that** the semantic annotations (SAT) are collected (clt) by a scanning technology system (STS) of the automated machine (AMC, MPL) - such as a camera, a "Radio-Frequency IDentification <RFID>"- reader or other suitable device depending on how the semantic annotations (SAT) are encoded, in which the automated machine (AMC, MPL) scans the work area (WA) with all the fixtures (FXT) preferably completely.

4. Method according to one of the claims 1 to 3, **characterized in that** the parameters (PM) the operations (AOP) of the assembly program (APG) are parameterized (ptz) according to the semantic annotations (SAT) associated with the operations (AOP) include at least one of the following (**i**) where to put the workpiece (WP1, WP2, ... WPn) in the work area (WA), (**ii**) how to put the workpiece (WP1, WP2, ... WPn) there, (**iii**) with which force to put the workpiece (WP1, WP2, ... WPn) there and (**iv**) from which direction the automated machine (AMC, MPL) has to approach a target location in the work area (WA).

5. Method according to one of the claims 1 to 4, **characterized in that** the further relative positions (RP') of the at least one automated machine (AMC, MPL) to the fixtures (FXT) are determined by using an optical system (OS) of the automated machine (AMC, MPL), which is able to detect (dtc) optical reference markers (ORM) assigned to the fixtures (FXT), or by using a "touch-up"-tool (TUT) of the automated machine (AMC, MPL), which is able to detect (dtc) mechanical reference markers (MRM), e.g., an indentation, assigned to the fixtures (FXT) .

6. Assembly arrangement (AAM) to program automated machines for assembling workpieces, including

a) at least one automated machine (AMC, MPL) with a control unit (CTU) running a control program (CPG), which related to a work area (WA) executes each under the control of the control unit (CTU) an assembly task (ABT) to assemble by automated machine motions (AMCM) a number of workpieces (WP1, WP2, ... WPn),
b) a set of fixtures (FXT), on which the workpieces (WP1, WP2, ... WPn) are placed at least partly in the work area (WA), which fixate the workpieces (WP1, WP2, ... WPn) in question during the assembly and which are mounted in relative positions (RP) to another, in particular in a regular grid on a precisely machined mounting base (MMB),
c) sequences of automated machine motions (SAMCM) of the at least one automated machine (AMC, MPL) accomplishing the assembly task (ABT), which are executed according to an assembly program (APG) with all required assembly related processing, assembly and/or handling operations (AOP) to be needed accordingly, wherein the assembly program (APG) is loadable into and runs on the control unit (CTU) and wherein each operation (AOP) depending on a specification of the operation is consistent with at least one movement of the automated machine (AMC, MPL),
d) a calibration process (CBP), by which further relative positions (RP') of the at least one automated machine (AMC, MPL) to the fixtures (FXT) fixating the workpieces (WP1, WP2, ... WPn) in question are determined, in particular during the assembly program related processing, assembly and/or handling operations AOP are programmed,

**characterized by characterized in that:**

e) the at least one automated machine (AMC, MPL) under the control of the control unit (CTU) running the control program (CPG) collects (clt) semantic annotations (SAT) describing the assembly task (ABT) and being associated with the fixtures (FXT),
f) the control unit (CTU) includes a non-transitory, processor-readable storage medium (STM) having processor-readable program-instructions of a program module (PGM) and a processor (PRC) connected with the storage medium (STM) executing the processor-readable program-instructions of the program module (PGM) to program automated machines for assembling workpieces, when a computer-implemented-tool (CIT), in particular a Computer-Program-Product, e.g. designed as an APP, is loaded into the control unit (CTU), by

- determining (dtm) based on the collected (clt) semantic annotations (SAT) a sequence of assembly steps (SAS) from the semantic annotations (SAT), wherein each step of the sequence of assembly steps (SAS) corresponds to one operation (AOP) of the assembly program (APG),

parameterizing (ptz) the operations (AOP) of the assembly program (APG) by parameters (PM) according to the semantic annotations (SAT) associated with the operations (AOP),
g) computing (cpt) by using a motion planning algorithm (MPA) the automated machine motions (AMCM) based on the sequence of assembly steps (SAS), the parameterized operations of the assembly program (APG) and the further relative positions (RP') of the at least one automated machine (AMC, MPL) to the fixtures (FXT).

7. Assembly arrangement (AAM) according to claim 6, **characterized in that** the semantic annotations (SAT) encode

- a type of the processing, assembly or handling operations (AOP) that need to be performed, in particular referring to a list and/or a database of operations available in a production system,
- how the processing, assembly, or handling operations (AOP) should be done, in particular done by relative movements or by using force parameters, and/or
- in which order the processing, assembly or handling operations (AOP) should be done, in particular by partial or total ordering.

8. Assembly arrangement (AAM) according to claim 6 or 7, **characterized by** a scanning technology system (STS) of the automated machine (AMC, MPL) - such as a camera, a "Radio-Frequency IDentification <RFID>"- reader or other suitable device depending on how the semantic annotations (SAT) are encoded - to collect (clt) the semantic annotations (SAT), wherein the automated machine (AMC, MPL) scans the work area (WA) with all the fixtures (FXT) preferably completely.

9. Assembly arrangement (AAM) according to one of the claims 6 to 8, **characterized in that** the parameter (PM) the operations (AOP) of the assembly program (APG) are parameterized (ptz) according to the semantic annotations (SAT) associated with the operations include at least one of the following (**i**) where to put the workpiece (WP1, WP2, ... WPn) in the work area (WA), (**ii**) how to put the workpiece (WP1, WP2, ... WPn) there, (**iii**) with which force to put the workpiece (WP1, WP2, ... WPn) there and (**iv**) from which direction the automated machine (AMC, MPL) has to approach a target location in the work area (WA).

10. Assembly arrangement (AAM) according to one of the claims 6 to 9, **characterized by**
an optical system (OS) of the automated machine (AMC, MPL) to determine the further relative positions (RP') of the at least one automated machine (AMC, MPL) to the fixtures (FXT), which is able to detect (dtc) optical reference markers (ORM) assigned to the fixtures (FXT), or a "touch-up"-tool (TUT) of the automated machine (AMC, MPL) to determine the further relative positions (RP') of the at least one automated machine (AMC, MPL) to the fixtures (FXT), which is able to detect (dtc) mechanical reference markers (MRM), e.g., an indentation, assigned to the fixtures (FXT).

11. Computer-implemented-tool (CIT), in particular a Computer-Program-Product, e.g. designed as an APP, for carrying out a method to program automated machines for assembling workpieces, by which
<**i**> related to a work area (WA) at least one automated machine (AMC, MPL) with a control unit (CTU) running a control program (CPG) executes each under the control of the control unit (CTU) an assembly task (ABT) to assemble by automated machine motions (AMCM) a number of workpieces (WP1, WP2, ... WPn), which are placed at least partly in the work area (WA) on a set of fixtures (FXT) that fixate the workpieces (WP1, WP2, ... WPn) in question during the assembly, wherein the fixtures (FXT) are mounted in relative positions (RP) to another, in particular in a regular grid on a precisely machined mounting base (MMB), <**ii**> sequences of automated machine motions (SAMCM) of the at least one automated machine (AMC, MPL) accomplishing the assembly task (ABT) are executed according to an assembly program (APG) with all required assembly related processing, assembly and/or handling operations (AOP) to be needed accordingly, wherein the assembly program (APG) is loadable into and runs on the control unit (CTU) and wherein each operation (AOP) depending on a specification of the operation is consistent with at least one movement of the automated machine (AMC, MPL) and <**iii**> further relative positions (RP') of the at least one automated machine (AMC, MPL) to the fixtures (FXT) fixating the workpieces (WP1, WP2, ... WPn) in question are determined by a calibration process (CBP), in particular during the assembly program related processing, assembly and/or handling operations AOP are programmed, includes

- a non-transitory, processor-readable storage medium (STM) having processor-readable program-instructions of a program module (PGM) for carrying out a process to program automated machines for assembling workpieces stored in the non-transitory, processor-readable storage medium (STM) and
- a processor (PRC) connected with the storage medium (STM) executing the processor-readable program-instructions of the program module (PGM) to carry out the process to program automated machines for assembling workpieces,

**characterized in that**
the processor (PRC) executes the instructions to carry out the process by

- determining (dtm) based on semantic annotations (SAT) describing the assembly task (ABT) being associated with the fixtures (FXT), collected (clt) by the at least one automated machine (AMC, MPL) and inputted into the processor (PRC) a sequence of assembly steps (SAS) from the semantic annotations (SAT), wherein each step of the sequence of assembly steps (SAS) corresponds to one operation of the assembly program (APG),
- parameterizing (ptz) the operations (AOP) of the assembly program (APG) by parameters (PM) according to the semantic annotations (SAT) associated with the operations(AOP) by parameters (PM),
- computing (cpt) by using a motion planning algorithm (MPA) the automated machine motions (AMCM) based on the sequence of assembly steps (SAS), the parameterized operations of the assembly program (APG) and the further relative positions (RP') of the at least one automated machine (AMC, MPL) to the fixtures (FXT).

12. Computer-implemented-tool (CIT) according to claim 11, **characterized in that**
the semantic annotations (SAT) encode

- a type of the processing, assembly or handling operations (AOP) that need to be performed, in particular referring to a list and/or a database of operations available in a production system,
- how the processing, assembly, or handling operations (AOP) should be done, in particular done by relative movements or by using force parameters, and/or
- in which order the processing, assembly or handling operations (AOP) should be done, in particular by partial or total ordering.

13. Computer-implemented-tool (CIT) according to claim 11 or 12, **characterized in that** the parameter (PM) the operations (AOP) of the assembly program (APG) are parameterized (ptz) according to the semantic annotations (SAT) associated with the operations include at least one of the following (**i**) where to put the workpiece (WP1, WP2, ... WPn) in the work area (WA), (**ii**) how to put the workpiece (WP1, WP2, ... WPn) there, (**iii**) with which force to put the workpiece (WP1, WP2, ... WPn) there and (**iv**) from which direction the automated machine (AMC, MPL) has to approach a target location in the work area (WA).

14. Computer-implemented-tool (CIT) according to one of the claims 11 to 13, **characterized by** being loadable into and run on the control unit (CTU) to be executed.

15. Computer-implemented-tool (CIT) according to one of the claims 11 to 14, **characterized by** being designed as sub-program of the assembly program (APG).

16. Automated machine (AMC, MPL) including

   a control unit (CTU) running a control program (CPG) and into which an assembly program (APG) is loadable to run on the control unit (CTU), wherein the control unit (CTU) includes a non-transitory, processor-readable storage medium (STM) having processor-readable program-instructions of a program module (PGM) and a processor (PRC) connected with the storage medium (STM) executing the processor-readable program-instructions of the program module (PGM),
   **characterized in that**
   a computer-implemented-tool (CIT), in particular a Computer-Program-Product, e.g. designed as an APP, according to one of the claims 11 to 15 is loaded to program the automated machine for assembling workpieces (WP1, WP2, ... WPn) into the processor (PRC) of the control unit (CTU).

17. Automated machine (AMC, MPL) according to claim 16, **characterized by** an optical system (OS) of the automated machine (AMC, MPL) to determine the further relative positions (RP') of the at least one automated machine (AMC, MPL) to the fixtures (FXT), which is able to detect (dtc) optical reference markers (ORM) assigned to the fixtures (FXT), or a "touch-up"-tool (TUT) of the automated machine (AMC, MPL) to determine the further relative positions (RP') of the at least one automated machine (AMC, MPL) to the fixtures (FXT), which is able to detect (dtc) mechanical reference markers (MRM), e.g., an indentation, assigned to the fixtures (FXT).

18. Automated machine (AMC, MPL) according to claim 16 or 17, **characterized by** a scanning technology system (STS) of the automated machine (AMC, MPL) - such as a camera, a "Radio-Frequency IDentification <RFID>"- reader or other suitable device depending on how the semantic annotations (SAT) are encoded - to collect (clt) the semantic annotations (SAT), wherein the automated machine (AMC, MPL) scans the work area (WA) with all the fixtures (FXT) preferably completely.

FIG 1

## FIG 2

CIT

### Computer-Implemented Tool

PRC

Processor
dtm, ptz, cpt

"loadable"

Program Modul — PGM

Storage Medium

STM

APG, AOP  CTU  CPG  AMC

### Control Unit

Assembly
Program

Control
Program

clt  SAT

dtm, ptz, cpt
Processor — PRC

Program Modul — PGM

Storage Medium

STM

AMC

MPL

STS

clt

dtc

SAT  ORM

dtc  TUT

MRM

EP 4 369 126 A1

FIG 3 — Process flow for programming an automated machine for assembling workpieces

Europäisches
Patentamt

European
Patent Office

Office européen
des brevets

## EUROPEAN SEARCH REPORT

Application Number

EP 22 20 6489

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2019 210752 A1 (TRUMPF LASER & SYSTEMTECHNIK GMBH [DE]) 21 January 2021 (2021-01-21) * the whole document * | 1-18 | INV. G05B19/418 |
| A | US 2018/339456 A1 (CZINGER KEVIN ROBERT [US] ET AL) 29 November 2018 (2018-11-29) * the whole document * | 1-18 | |
| A | US 5 562 277 A (SWANN GEORGE R [US] ET AL) 8 October 1996 (1996-10-08) * the whole document * | 1-18 | |

TECHNICAL FIELDS
SEARCHED      (IPC)

G05B

The present search report has been drawn up for all claims

| Place of search | Date of completion of the search | Examiner |
|---|---|---|
| The Hague | 11 April 2023 | Sollazzo, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 6489

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2023

| Patent document cited in search report | Publication date | Patent family member(s) | | Publication date |
|---|---|---|---|---|
| DE 102019210752 A1 | 21-01-2021 | DE 102019210752 A1 | | 21-01-2021 |
| | | WO 2021013725 A1 | | 28-01-2021 |
| US 2018339456 A1 | 29-11-2018 | CN 108927988 A | | 04-12-2018 |
| | | CN 114770923 A | | 22-07-2022 |
| | | CN 209971544 U | | 21-01-2020 |
| | | CN 213321727 U | | 01-06-2021 |
| | | EP 3630396 A1 | | 08-04-2020 |
| | | JP 7184811 B2 | | 06-12-2022 |
| | | JP 2020521642 A | | 27-07-2020 |
| | | KR 20200000847 A | | 03-01-2020 |
| | | KR 20220093257 A | | 05-07-2022 |
| | | US 2018339456 A1 | | 29-11-2018 |
| | | US 2022339875 A1 | | 27-10-2022 |
| | | WO 2018217890 A1 | | 29-11-2018 |
| US 5562277 A | 08-10-1996 | NONE | | |

EPO FORM P0459

For more details about this annex : see Official Journal of the European Patent Office, No. 12/82